(19) **Europäisches Patentamt**
**European Patent Office**
**Office européen des brevets**

(11) Veröffentlichungsnummer: **0 617 083 A1**

## (12) EUROPÄISCHE PATENTANMELDUNG

(21) Anmeldenummer: **94104718.5**

(51) Int. Cl.⁵: **C08L 23/08**

(22) Anmeldetag: **24.03.94**

(30) Priorität: **26.03.93 DE 4309928**

(43) Veröffentlichungstag der Anmeldung:
**28.09.94 Patentblatt 94/39**

(84) Benannte Vertragsstaaten:
**AT BE CH DE DK ES FR IT LI NL SE**

(71) Anmelder: **DLW Aktiengesellschaft**
**Postfach 1253**
**D-74319 Bietigheim-Bissingen (DE)**

(72) Erfinder: **Feuchter, Kuno**
**Schöllerstrasse 7**
**D-74321 Bietigheim-Bissingen (DE)**
Erfinder: **Gautschi, Kurt**
**Hornmoldstrasse 3**
**D-74321 Bietigheim-Bissingen (DE)**
Erfinder: **von Olnhausen, Heinz**
**Carl-Spitzweg-Strasse 29**
**D-74321 Bietigheim-Bissingen (DE)**
Erfinder: **Petzold, Peter**
**Schwalbenhälde 34**
**D-74354 Besigheim (DE)**
Erfinder: **Vollmer, Horst**
**Leonberger Weg 9**
**D-71732 Tamm (DE)**

(74) Vertreter: **Müller-Boré & Partner**
**Patentanwälte**
**Isartorplatz 6**
**D-80331 München (DE)**

(54) **Homogene Kunststoffbahnen oder -platten sowie deren Verwendung und Verfahren zu deren Herstellung.**

(57) Es werden homogene Kunststoffbahnen oder -platten mit einem Gehalt an einem polymeren Bindemittel, üblichen Füllstoffen und gegebenenfalls Hilfsstoffen beschrieben, wobei in dem polymeren Bindemittel wenigstens ein Ethylen-Alkylacrylat-Copolymer enthalten ist. Weiterhin wird ein Verfahren beschrieben, mit dem die Kunststoffbahnen oder -platten erhältlich sind. Die Kunststoffbahnen oder -platten werden als Wand-, Decken-, Bodenbelag, Dekorfolie oder künstliches Furnier verwendet.

EP 0 617 083 A1

Die Erfindung betrifft homogene Kunststoffbahnen oder -platten sowie deren Verwendung und Verfahren zu deren Herstellung.

Unter homogenen Kunststoffbahnen oder -platten im Sinne der vorliegenden Erfindung werden Flächengebilde verstanden, die einschichtig ausgebildet und deren physikalische Eigenschaften von der Oberseite bis zur Unterseite gleichbleibend (=homogen) sind. Solche homogenen Kunststoffbahnen oder -platten werden insbesondere als Bodenbeläge verwendet. Durch den homogenen Aufbau sind solche Kunststoffbahnen oder -platten auch bei stärkerer Beanspruchung einsetzbar, da sich die optischen und physikalischen Eigenschaften kaum verändern. Die ebenfalls im Handel erhältlichen nicht-homogenen Kunststoffbahnen oder - platten sind bezüglich ihrer Gebrauchseigenschaften den homogenen unterlegen.

Aus DE-C-16 79 822 (=US-PS-3,761,555), DE-C2-32 35 166 (=EP-C2-0 106 148), DE-C2-33 24 480, DE-A1-35 07 655 und EP-A2-0 227 029 sind homogene Kunststoffbahnen oder -platten sowie Verfahren zu deren Herstellung bekannt. Hierbei handelt es sich um mehrfarbig marmorierte, homogene Kunststoffbahnen oder -platten aus thermoplastischem Kunststoff auf der Basis von Polyvinylchlorid (PVC). Die Verschleißfestigkeit (Abriebfestigkeit) bekannter homogener Kunststoffbahnen oder -platten ist insbesondere vom Füllstoffgehalt abhängig. Übliche Mischungen enthalten 60-80 Gew.-% weichmacherhaltiges PVC (Weichmacheranteil 40-60 Gew.-%) als Bindemittel sowie 20-40 Gew.-% eines Füllstoffes (z.B. Calciumcarbonat). Die Verschleißfestigkeit eines Bodenbelages auf der Basis einer solchen üblichen Mischung steigt dabei mit steigendem Bindemittelgehalt an. Jedoch verteuert ein zu hoher Bindemittelanteil das Produkt wesentlich, so daß daher ein Kompromiß zwischen ausreichender Verschleißfestigkeit und annehmbaren Warenrohstoffkosten gesucht werden muß.

Weiterhin weisen weichmacherhaltige Bindemittel wesentliche Nachteile auf, z.B. kann der Weichmacher in den Klebstoff, mit dem die als Boden- oder Wandbelag verwendete Kunststoffbahn oder -platte verklebt worden ist, migrieren. Dadurch kann die Haftung so verschlechtert werden, daß es bei Belastung zu Blasenbildung, Schrumpfung, Versprödung und Rißbildung des Belags kommen kann. Weiterhin kann der Weichmacher ausschwitzen, wodurch ein Bodenbelag zum Schmutzfänger wird, der schwer zu säubern ist. Daneben stellen die Weichmacher ein Kanalisationssystem für migrierende Farbstoffe dar. Derartig penetrierte Verfärbungen lassen sich nicht mehr entfernen. Weichmacher auf der Basis der sehr verbreiteten Phthalsäureester (an erster Stelle Di-2-ethyl-hexylphthalat) sind flüchtig und stellen somit ein Problem für die Umwelt dar.

Schließlich ergeben sich Probleme bei der Entsorgung von Kunststoffbahnen oder -platten auf der Basis von PVC-haltigen Kunststoffen, da bei der Verbrennung von PVC Chlorwasserstoff frei wird, der Metallteile der Verbrennungsanlagen korrodieren kann und gesundheitsschädlich ist.

In der EP-A2-0 227 029 wird die Verwendung von Ethylen-Vinylacetat-Copolymeren (EVA) als Bindemittel für Bodenbeläge vorgeschlagen. Der EVA-Anteil im Gesamtansatz beträgt 69 Gew.-%. Diese Bodenbeläge weisen zwar eine hohe Verschleißfestigkeit auf, sie sind jedoch oberhalb von 80°C klebrig und kaum zu verarbeiten. Diese Tatsache ist auf den hohen Vinylacetat-Anteil des Copolymeren (ca. 20 Gew.-% bezogen auf den Gesamtansatz) zurückzuführen. Weiterhin ist ein solcher Belag so weich, daß er für Bodenbeläge praktisch nicht einsetzbar ist.

In der EP-B1-0 321 760 wird eine homogene, mehrfarbig strukturierte Kunststoffbahn oder -platte auf der Basis von EVA als polymeres Bindemittel vorgeschlagen, wobei der Vinylacetat-Anteil der Kunststoffbahn oder -platte 3 bis 14 Gew.-% des Gesamtansatzes beträgt. Diese Kunststoffbahn oder -platte soll eine verbesserte Verschleißfestigkeit und ein verbessertes ästhetisches Erscheinungsbild zeigen.

Kunststoffbahnen oder -platten mit EVA-Anteilen weisen jedoch erhebliche Nachteile auf.

1. Nach der Liste der maximalen Arbeitsplatzkonzentrationen (aus: Das neue Chemikaliengesetz, Handbuch der gefährlichen Stoffe, Eberhard Quellmalz, Weka-Verlag, Februar 1992) wird Vinylacetat in die krebserzeugende Gruppe IIIB eingestuft. Somit können sich erhebliche Probleme und Risiken bei der Herstellung von EVA-enthaltenden Kunststoffbahnen oder - platten und deren Verwendung als Bodenbelägen ergeben, insbesondere im Hinblick auf die ständig sich verschärfenden Sicherheitsvorschriften.

Der Restmonomergehalt von Vinylacetat liegt bei handelsüblichen EVA-Polymeren im Bereich von 0,1 bis 0,5 Gew.-%. Dieser Vinylacetatanteil läßt sich durch nachfolgende Behandlung, z.B. Stripp-Verfahren, nicht weiter vermindern. Somit kann es zu erheblichen Belastungen in unzureichend belüfteten Räumen kommen, da aus Bodenbelägen, die handelsübliche EVA-Polymere enthalten, langsam und kontinuierlich Vinylacetat abgegeben wird.

2. EVA zeigt eine relativ geringe thermische Stabilität, d.h. EVA neigt dazu, bei höheren Temperaturen Essigsäure abzuspalten. Die merkliche Essigsäure-Abspaltung setzt für EVA schon oberhalb ca. 180°C ein. Somit ergeben sich Probleme, wenn andere Polymere wie z.B. hochschmelzende isotaktische Polypropylene zugegeben werden sollen, um mechanische Eigenschaften (Verschleißfestigkeit, Härte) zu verbessern, da bei den dann nötigen höheren Verarbeitungstemperaturen bereits die Essigsäure-Abspaltung beginnt. Diese Essigsäure-Abspaltung beeinflußt die Eigenschaften des EVA und somit auch die Eigenschaften der Bodenbeläge, die EVA enthalten, negativ, da in den Polymerketten Doppelbindungen erzeugt werden, die oxidativ angegriffen werden können und zu einem Abbau des Polymeren führen.

Aufgabe der vorliegenden Erfindung ist es somit, homogene Kunststoffbahnen oder -platten bereitzustellen, die die vorteilhaften Eigenschaften bekannter Kunststoffbahnen oder -platten besitzen, ohne jedoch deren Nachteile aufzuweisen. Weiterhin ist es Aufgabe der vorliegenden Erfindung, ein Verfahren zu deren Herstellung bereitzustellen.

Diese Aufgaben werden durch die in den Patentansprüchen definierten Gegenstände gelöst.

Die erfindungsgemäßen Kunststoffbahnen oder -platten bestehen aus einem polymeren Bindemittel, üblichen Füllstoffen und gegebenenfalls Hilfsstoffen, wobei das polymere Bindemittel wenigstens ein Ethylen-Alkylacrylat-Copolymer enthält.

Überraschenderweise wurde gefunden, daß bei den erfindungsgemäßen Kunststoffbahnen oder -platten kein Weichmacher nötig ist. Dennoch werden Kunststoffbahnen oder -platten erhalten, die eine ausreichende Flexibilität aufweisen. Somit werden die Nachteile weichmacherhaltiger Kunststoffbahnen oder -platten überwunden.

Weiterhin wurde überraschenderweise gefunden, daß die erfindungsgemäßen Kunststoffbahnen oder -platten, die Ethylen-Alkylacrylat-Copolymere enthalten, eine hohe Verschleißfestigkeit aufweisen.

Der Einsatz von Ethylen-Alkylacrylat-Copolymeren hat weiterhin den Vorteil, daß bei der Verarbeitung höhere Temperaturen, beispielsweise Temperaturen von oberhalb etwa 180°C, ohne Beeinträchtigung des Polymeren angewandt werden können. Dies ist dort vorteilhaft, wo zur Optimierung von mechanischen Eigenschaften, wie z.B. Verschleißfestigkeit, hochschmelzende Polymere, wie isotaktische Polypropylen-Typen, zugesetzt werden. Es lassen sich somit auf Extrudern Formulierungen plastifizieren, welche bei Einsatz von EVA bereits zu Essigsäureabspaltung führen würden. Die Essigsäureabspaltung ist, wie vorstehend ausgeführt, für eine Verminderung der Qualität der Kunststoffbahnen oder - platten verantwortlich. Letztendlich kommt es dazu, daß die Kunststoffbahnen oder -platten ihre Eignung, insbesondere zur Verwendung als Bodenbelag, verlieren.

Ebenso ist es überraschend, daß die Wasseraufnahme von erfindungsgemäßen Kunststoffbahnen oder -platten, die Ethylen-Alkylacrylat-Copolymere enthalten, geringer ist als bei bekannten Kunststoffbahnen oder -platten. Dies wirkt sich auf die Maßstabilität und somit auf die Gebrauchseigenschaft günstig aus, da die Quellung (Ausdehnung) bei Reinigungsvorgängen gering ist. Beim Quellen neigen die Kunststoffbahnen oder -platten zur Blasenbildung und zum Reißen der Klebefugen. Dadurch wird die Klebeverbindung des Belages zur Unterlage und zu benachbarten Bahnen oder Platten zerstört. Außerdem kann in die gebildeten Risse der Klebefugen Schmutz eindringen, wodurch auch das ästhetische Erscheinungsbild des Belages beeinträchtigt wird.

Ein weiterer Vorteil der erfindungsgemäßen Kunststoffbahnen oder -platten ist die Tatsache, daß die Alkylacrylat-Monomeren zur Herstellung der Ethylen-Alkylacrylat-Copolymeren (z.B. Methylacrylat, Ethylacrylat und Butylacrylat) in der MAK-Liste nicht in eine krebserzeugende Gruppe eingestuft sind. Somit ist die Umweltbelastung bei der Herstellung der erfindungsgemäßen Kunststoffbahnen oder -platten geringer. Weiterhin ist auch die Exposition des Benutzers mit toxischen Restmonomeren, die sich immer in den Kunststoffbahnen oder -platten befinden, wesentlich geringer.

In den erfindungsgemäßen Kunststoffbahnen oder -platten enthält das Ethylen-Alkylacrylat-Copolymer 4 bis 30 Gew.-%, bevorzugt 10 bis 15 Gew.-% Alkylacrylat.

In den erfindungsgemäßen Kunststoffbahnen oder -platten enthält das polymere Bindemittel 20 bis 80 Gew.-%, bevorzugt 40 bis 70 Gew.-%, besonders bevorzugt 60 bis 70 Gew.-%, mindestens eines Ethylen-Alkylacrylat-Copolymers, bezogen auf das polymere Bindemittel. Die Flexibilität der erfindungsgemäßen Kunststoffbahnen oder -platten ist dabei vom Gehalt an polymerem Bindemittel abhängig (mit höherem Acrylatanteil nimmt die Flexibilität zu).

Die erfindungsgemäßen Kunststoffbahnen oder -platten enthalten 20 bis 60 Gew.-%, bevorzugt 30 bis 50 Gew.-%, besonders bevorzugt 35 bis 45 Gew.-% polymeres Bindemittel.

In den erfindungsgemäßen Kunststoffbahnen oder -platten ist das Alkylacrylat im Ethylen-Alkylacrylat-Copolymer vorzugsweise ein Methylacrylat, Ethylacrylat, Butylacrylat oder ein beliebiges Gemisch dieser Copolymeren, besonders bevorzugt ist Ethylacrylat, da es weniger Geruchsintensiv als z.B. Butylacrylat ist. Das Ethylen-Alkylacrylat-Copolymere ist somit vorzugsweise ein Copolymer, das durch Copolymerisation von Ethylen mit einem Alkylacrylat, ausgewählt aus Methylacrylat, Ethylacrylat, Butylacrylat oder jede beliebige Mischung davon, erhalten wurde. Diese Copolymeren können in an sich bekannter Weise hergestellt werden, vorzugsweise durch Hochdruckpolymerisation aus der Gasphase.

Die erfindungsgemäß verwendeten Ethylen-Alkylacrylat-Copolymere können sowohl statistische Copolymere als auch Blockcopolymere sein, wobei statistische Copolymere bevorzugt sind.

In einer bevorzugten Ausführungsform der Erfindung enthält das polymere Bindemittel, neben dem Ethylen-Alkylacrylat-Copolymer, zusätzlich wenigstens ein weiteres Polymer. Dieses weitere Polymer ist ausgewählt aus Homo- oder Copolymeren von ethylenisch ungesättigten Verbindungen oder einem beliebigen Gemisch davon. Bevorzugt werden Homopolyolefine, wie z.B. Polyethylen oder Polypropylen, eingesetzt. Dabei ist besonders isotaktisches Polypropylen bevorzugt. Polyethylen oder Polypropylen können auch als Copolymere verwendet werden, wobei ein statistisches Copolymer (Random) aus den Monomeren Propen und Ethen bevorzugt ist. Weiterhin können Terpolymere, bevorzugt Ethylen-Propylen-Dien-Mischpolymere (EPDM) und/oder Blockcopolymere, bevorzugt Styrol-Isopren-Styrol (SIS)-und/oder Styrol-Butadien-Styrol (SBS)-Blockcopolymere als weiteres Polymer im polymeren Bindemittel verwendet werden. Mit diesen weiteren Polymeren werden überlegene Gebrauchseigenschaften erzielt. So ist es z.B. von Vorteil, wenn hochschmelzendes isotaktisches Polypropylen als weiteres Polymer zum polymeren Bindemittel zugesetzt wird, um die Verschleißfestigkeit (Abrieb, Härte) zu verbessern. Dabei haben die erfindungsgemäß verwendeten Alkylacrylate den Vorteil, daß sie bei den höheren Verarbeitungstemperaturen, die nötig sind, wenn hochschmelzende isotaktische Polypropylene eingesetzt werden, noch stabil sind. Im Gegensatz dazu sind Ethylen-Vinylacetat-Copolymere bei höheren Verarbeitungstemperaturen nicht stabil, da sie Essigsäure abspalten, was nicht nur zu unerwünschten Geruchsbelästigungen und Umweltbelastungen führt, sondern auch zum oxidativen Abbau des Copolymers führen kann.

Die erfindungsgemäßen Kunststoffbahnen oder -platten können weiterhin übliche Füllstoffe, wie z.B. Kreide, Kaolin, Talkum, Holzmehl, Quarzmehl, Dolomit, Kieselerde, Schwerspat und Schiefermehl oder ein beliebiges Gemisch davon aufweisen, wobei der Anteil der Füllstoffe, bezogen auf die Kunststoffbahnen oder - platten 40 bis 80 Gew.-%, bevorzugt 50 bis 70 Gew.-%, besonders bevorzugt 60 bis 65 Gew.-%, beträgt.

Gegebenenfalls können Pigmente, Antioxidantien sowie weitere übliche Hilfsstoffe, wie z.B. Gleitmittel, Antistatika oder Verarbeitungshilfsmittel zum Gesamtansatz, d.h. zu den Komponenten aus denen die Kunststoffbahnen oder -platten bestehen, zugesetzt werden. Diese Hilfsstoffe sind in diesem technischen Gebiet bekannt. Es können z.B. Pigmente eingesetzt werden, wenn mehrfarbig strukturierte Kunststoffbahnen oder -platten gewünscht werden. Durch die Verwendung von mehreren Pigmenten unterschiedlicher Farbe lassen sich unterschiedliche Farben in den resultierenden Kunststoffbahnen oder -platten erzielen. Durch den Zusatz von Pigmenten werden die ästhetischen Eigenschaften der Kunststoffbahnen oder -platten verbessert. Überraschenderweise wurde gefunden, daß die erfindungsgemäßen Kunststoffbahnen oder -platten, die mehrfarbig strukturiert sind, eine scharfe Begrenzung der Farbübergänge bis in kleinste Details und keine verwaschenen Strukturen aufweisen.

In einer bevorzugten Ausführungsform der Erfindung werden Kunststoffbahnen oder -platten bereitgestellt, bei denen das polymere Bindemittel folgende Bestandteile umfaßt:

(a) 40 bis 80 Gew.-% mindestens eines Ethylen-Alkylacrylat-Copolymers,

(b) 5 bis 40 Gew.-% mindestens eines Homo- und/oder Copolymers von Monomeren, ausgewählt aus Ethylen und Propylen, und

(c) 2 bis 20 Gew.-% wenigstens eines Polymers, ausgewählt aus EPDM, SIS- und SBS-Blockcopolymer.

In einer weiteren bevorzugten Ausführungsform werden Kunststoffbahnen oder -platten bereitgestellt, wobei die Kunststoffbahnen oder -platten folgende Bestandteile umfaßen:

(aa) 20 bis 60 Gew.-% polymeres Bindemittel, das ein Bindemit tel der vorstehenden Zusammensetzung (a), (b) und (c) sein kann,

(bb) 40 bis 80 Gew.-% Füllstoff(e),

(cc) 2 bis 8 Gew.-% Pigment(e),

(dd) 0,1 bis 1 Gew.-% Antioxidantien und ggf.

(ee) bis zu 5 Gew.-% übliche Hilfsstoffe.

Es ist wünschenswert, daß die Kunststoffbahnen oder -platten mehrfarbig strukturiert sind, da die Qualität von Kunststoffbahnen oder -platten, die z.B. als Bodenbeläge oder Dekorfolien verwendet werden sollen, nicht nur von mechanischen Eigenschaften abhängt, sondern auch von den ästhetischen Eigenschaften. Es wurde nun überraschenderweise gefunden, daß die erfindungsgemäßen Kunststoffbahnen oder -Platten sich hervorragend durch Mischen von mindestens zwei unterschiedlich gefärbten Ansätzen zu mehrfarbig strukturierten Kunststoffbahnen oder -platten verarbeiten lassen, die eine scharfe Begrenzung der Farbübergänge bis in kleinste Details und keine verwaschenen Strukturen aufweisen.

Die erfindungsgemäßen Kunststoffbahnen oder -platten werden hergestellt, indem das polymere Bindemittel, Füllstoffe und ggf. Hilfsstoffe vorgemischt werden und über Aggregate, wie z.B. Innenmischer, Zweiwellenextruder, Planetwalzenextruder oder Walzwerk, plastifiziert und granuliert werden. Nachfolgend werden die Granulate in Verdichtungsaggregaten, wie z.B. Kalander, Doppelbandpresse oder statische Presse, zu einer Kunststoffbahn oder -platte verpreßt. Zur Erzielung mehrfarbig strukturierter erfindungsgemäßer Kunststoffbahnen oder -platten werden verschiedenfarbige Granulate, die durch Mischen verschiedenfarbiger Pigmente erhalten werden, in den Verdichtungsaggregaten verpreßt.

Die erfindungsgemäßen Kunststoffbahnen oder -platten lassen sich z.B. auf folgendem Weg erhalten: Die Bestandteile für das polymere Bindemittel, die Füllstoffe und ggf. Hilfsstoffe werden zusammen in einem Wirbelmischer kalt vermischt und anschließend in einem Innenmischer plastifiziert. Die Masse wird auf ein Walzwerk gegeben und ein Fellstreifen abgezogen, der nachfolgend einem Heißgranulator zugeführt wird. Das so erhaltenen Granulat wird erwärmt und im Walzenspalt eines Kalanders zu einem Fell gewalzt. Eine Marmorierung wird erzielt, wenn z.B. andersfarbiges Granulat vor der Herstellung des Fells zugemischt wird.

Eine andere Möglichkeit zur Herstellung der erfindungsgemäßen Kunststoffbahnen oder -platten besteht darin, das polymere Bindemittel und die Füllstoffe mit den Hilfsstoffen getrennt über gravimetrische Dosierungen einem Zweiwellenextruder zuzuführen und dort zu plastifizieren. Das Plastifikat wird kontinuierlich in einen Einwellenextruder überführt und nachfolgend zu einem Granulat verarbeitet, indem das austretende Plastifikat mittels rotierender Messer abgeschlagen wird. Das so erhaltene Granulat kann z.B. mittels einer Zweitrommelauma zu einer Platte verpreßt werden. Zur Erzielung einer Musterung kann kurz vor Austritt der Masse an der Lochplatte des Einwellenextruders kaltes, andersfarbiges Granulat zudosiert werden.

Eine weitere Möglichkeit zur Herstellung der erfindungsgemäßen Kunststoffbahnen oder -platten besteht darin, nach der Mischung der Bestandteile in einem Wirbelmischer die Plastifizierung in einem Planetwalzenextruder mit einwelligem Austragsteil durchzuführen. Das Plastifikat wird anschließend über eine Lochscheibe granuliert. Granulate verschiedener Farben werden homogen in einem Pflugscharmischer gemischt und nachfolgend in einem Umluftofen erwärmt. Das so erhaltene erwärmte Granulat wird dann im Kalanderspalt zu einem Fell ausgezogen, bevor es in einer Schlagkreuzmühle zerkleinert wird. Das erhaltene Granulat wird dann auf einer Doppelbandauma verpreßt.

In einem alternativen Herstellungsverfahren für die erfindungsgemäßen Kunststoffbahnen oder -platten werden Bindemittel und Füllstoff(e), evtl. mit den Hilfsstoffen, separat in einem Wirbelmischer gemischt und die Gemische einem Zweiwellenextruder zugeführt und plastifiziert. Aus dem Plastifikat wird dann ein Granulat gebildet, das auf einer Doppelbandpresse zu einem Belag verpreßt wird. Zur Erzielung mehrfarbig strukturierter Kunststoffbahnen oder -platten wird dem Plastifikat durch eine Öffnung andersfarbiges Granulat zugeführt, ohne daß dabei eine Verteilung des andersfarbigen Granulats stattfindet.

In einem weiteren Herstellungsverfahren der erfindungsgemäßen Kunststoffbahnen oder -platten wird die Gesamtrezeptur, bestehend aus polymerem Bindemittel, Füllstoff(e) und ggf. Hilfsstoffen, auf einem Zweiwellenextruder plastifiziert. Nachfolgend wird das Plastifikat auf eine Seite eines Walzwerks dosiert, das einen keilförmigen Walzenspalt aufweist. Durch den keilförmigen Walzenspalt kann an der Abnahmeseite kontinuierlich ein Fellstreifen abgezogen werden, der einem Granulator zugeführt wird. Das erhaltene Granulat wird mittels einer statischen Presse zu Platten verpreßt. Wenn es erwünscht ist, können auch bei diesem Verfahren mehrfarbig strukturierte Kunststoffbahnen oder -platten hergestellt werden. Dabei werden zunächst durch Zugabe von jeweils unterschiedlichen Pigmenten verschiedenfarbige Gesamtrezepturen erstellt und, wie vorstehend beschrieben, zu einem Granulat verarbeitet. Die verschiedenfarbigen Granulate werden dann gemeinsam z.B. auf ein Walzwerk dosiert und dann, wie oben beschrieben, weiter behandelt.

Vorzugsweise wird das Plastifikat, das z.B. nach der Mischung der Bestandteile (organisches Bindemittel, Füllstoffe, Hilfsmittel) in einem Wirbelmischer und nachfolgender Plastifizierung in einem Zweiwellenextruder erhalten wurde, direkt auf einen Scherwalzenkompaktor der Firma Condux gegeben. Zur Erzielung einer Musterung werden entweder mindestens zwei verschiedene Pigmente oder mindestens zwei unterschiedlich gefärbte vorgefertigte Granulate an verschiedenen, beliebig bestimmbaren Stellen dem Materialstrom zugegeben, so daß eine differenzierte Vermischung mit dem Hauptmassestrom erfolgt. Das Plastifikat wird am Granulatorteil des Kompaktors zu Granulat geformt. Das aus dem Scherwalzenkompaktor erhaltene Granulat kann z.B. auf einer Doppelbandpresse zu einem Belag verpreßt werden. Dieses Verfahren ist deshalb bevorzugt, da wegen der offenen Bauweise des Scherwalzenkompaktors die Dosierpositionen für die Zugabe weiterer Komponenten beliebig verändert werden können. Dadurch ist eine variable Gestaltung der Musterung in weiten Grenzen möglich.

Die erfindungsgemäßen Kunststoffbahnen oder -platten können als Wand-, Decken-, Bodenbelag, Dekorfolie oder künstliches Furnier z.B. für Möbel verwendet werden. Besonders bevorzugt ist die Verwendung als Bodenbelag. Dabei können die Kunststoffbahnen oder -platten, die als Bodenbelag verwendet werden, mit einem üblichen "Finish", z.B. mit handelsüblichen Acrylat-Pflegedispersionen oder UV-Lacken, versehen sein, um das Anschmutzverhalten des Bodenbelags zu verbessern.

Die erhaltenen erfindungsgemäßen Kunststoffbahnen oder -platten wurden den nachfolgend beschriebenen Tests unterworfen:

Die Verschleißfestigkeit wurde nach DIN 51963 untersucht, wobei der Dickenverlust in Millimeter (mm) angegeben wird.

Der Schmelzfluß (MFI) wurde mit einem Schmelzfluß-Meßgerät Typ 011 der Firma Göttfert ermittelt. Der MFI-Wert charakterisiert die Fließeigenschaften der Kunststoffbahnen oder -platten in der Wärme, was bei den Verarbeitungsbedingungen Einflüsse auf die Musterung hat. Die zu untersuchenden Kunststoffbahnen oder - platten werden dazu als Granulat in eine auf 190°C temperierte Kammer gefüllt, temperiert und ein Stempel mit einem Gewicht von 2,16 kg aufgesetzt. Die zu untersuchenden Kunststoffbahnen oder -platten werden durch eine am unteren Ende der Kammer angebrachte Düse gepreßt. Es wird die Masse, welche in 10 Minuten durch die Düse strömt, bestimmt.

Die Charakterisierung von Kunststoffbahnen oder -platten bei statischer Belastung erfolgt nach DIN 51955. Der Belag wird dazu mit einer Kraft von 50 N auf einer Fläche von 1 cm$^2$ über 150 Minuten belastet. Der Index (I) ist der Quotient aus Eindringtiefe (ET) nach Belastung zur Ausgangsdicke (D) mal 100, d.h. I = 100 x ET/D. Ein niedriger Index-Wert deutet dabei auf eine härtere Kunststoffbahn oder -platte hin. Die Elastizität errechnet sich aus der Eindringtiefe nach Belastung minus Eindringtiefe nach Entlastung dividiert durch Eindringtiefe nach Belastung mal 100. Dabei ist es wünschenswert, Kunststoffbahnen oder - platten zu erhalten, bei denen der Elastizitäts-Wert hoch ist.

Soweit nicht anders angegeben sind alle Mengenangaben in Gew.-% und alle Temperaturangaben in °C.

Die nun folgenden Beispiele sollen die Erfindung weiter erläutern.


Beispiel 1

20,0 Ethylen-Methylacrylat-Copolymer (Lotryl® 24 MA 005 von ELF ATO-Chemie)
5,0 EPDM (Buna® AP 437 von Hüls AG)
5,0 PP-PE-Copolymer (Moplen® 1 x 35 AF von Himont)
4,7 PP-PE-Copolymer (Vestolen® P 5300 von Hüls AG)
20,0 Quarz/Kaolinit (Sillitin® N 85 von Hoffmann Mineral)
40,0 Kreide (Omyacarb® 6 von Omya)
5,0 Pigmente (Titandioxid oder andere Pigmente)
0,1 Antioxidans (Irganox® 1076 von Ciba-Geigy)
0,2 Gleitmittel (Bärolub® FTA von Bärlocher)          100,0

Alle vorstehend aufgezählten Verbindungen wurden in einem Wirbel mischer (Fa. Henschel) kalt gemischt und anschließend in einem Stempelkneter GK5 (Fa. Werner und Pfleiderer) bei einer Massetemperatur von 175 bis 190°C über 5 bis 7 Minuten plastifiziert. Das erhaltene Plastifikat wurde auf ein Walzwerk (Fa. Schwabenthan) bei einer Walzentemperatur von 130 bis 150°C gegeben. Es wurde ein Fellstreifen mit ca. 1,5 mm Dicke abgezogen, der einem Heißgranulator (Fa. Werner & Pfleiderer) zugeführt wurde, so daß Stücke von bis ca. 1 cm Kantenlänge entstanden. Das so erhaltene Granulat wurde in einem Umluftofen (Typ UL 30, Fa. Memmert) auf eine Temperatur von 150°C erwärmt. Das erwärmte Granulat wird im Walzenspalt eines S-Form-Kalanders (Fa. Berstorff) bei einer Walzentemperatur von 40 bis 70°C zu einem Fell gewalzt. Zweifarbig längsgerichtete Strukturen können erzielt werden, wenn unterschiedlich gefärbte Granulate zugesetzt werden. Unterschiedlich gefärbte Granulate werden erhalten, indem verschiedenfarbige Pigmente eingesetzt werden. Schönere Gestaltungsmöglichkeiten hat man bei Einsatz von vier oder mehr Einzelfarben, die ggf. in unterschiedlichen Mengenverhältnissen gemischt werden. Mit diesem Verfahren wird eine Kunststoffbahn oder -platte mit einer Dicke von ca. 2,0 mm und einer Dichte von 1,59 g/cm$^3$ erhalten.


Beispiel 2

23,0 Ethylen-Butylacrylat-Copolymer (Neste® NCPE 6427 Gemisch 1 von Neste)
2,0 EPDM (Buna® Ap 347 von Hüls AG)
9,7 PP-PE-Copolymer (Vestolen® P5300 von Hüls AG)
30,0 Quarz-Kaolinit (Sillitin® N 85 von Hoffmann Mineral)
Gemisch 2 30,0 Kreide (Omyacarb® 6 von Omya)
5,0 Pigment (Titandioxid)
0,1 Antioxidans (Irganox® 1076 von Ciba-Geigy)
0,2 Gleitmittel (Bärolub® FTA von Bärlocher)

EP 0 617 083 A1

$\overline{10\overline{0}},0$

Gemisch 1 und Gemisch 2 wurden getrennt über gravimetrische Dosierungen einem Zweiwellenextruder ZE 90A/33D der Fa. Berstorff zugeführt und dort plastifiziert. Das Plastifikat wurde kontinuierlich in einen Einwellenextruder KE 150 der Fa. Berstorff überführt und dort an einer Lochplatte mit 12 cm Durchmesser mittels rotierender Messer abgeschlagen.

**Verfahrensbedingungen**

1. Temperaturen des Zweiwellenxtruders

| Zone | 1 | 2 | 3 | 4 | 5 | 6 | 7 | 8 | 9 |
|------|-----|-----|-----|-----|-----|-----|-----|-----|-----|
| Temp. | 200 | 180 | 170 | 170 | 170 | 170 | 170 | 170 | 170 |

| Schneckendrehzahl | 185 U/min |
|-------------------|-----------|
| Durchsatz | 500 kg/h |

2. Temperatur des Einwellenextruders

| Welle | gekühlt |
|-------|---------|
| Mantel | 140 °C |
| Schneckendrehzahl | 50 U/min |

Auf diese Art wird ein Granulat mit einer Dicke von ca. 2,5 bis 3 mm erhalten, das nachfolgend auf einer Zweitrommelauma der Firma Berstorff (Heiztrommel 180 °C, Kühltrommel 55 °C, Banddruck 4 bar) zu einer ca. 2 mm dicken Platte verpreßt wird. Zur Erzielung einer Musterung kann kurz vor Austritt der Masse an der Lochplatte kaltes, andersfarbiges Granulat zudosiert werden.

Beispiel 3

Ein Ansatz wie in Beispiel 2 wurde in einem Wirbelmischer der Fa. Henschel gemischt. Die Plastifizierung erfolgte über einen Planetwalzenextruder ZSE 170/250 3D der Fa. Battenfeld mit einwelligem Austragsteil. Das Plastifikat wurde über eine Lochscheibe mit 3,5 cm Durchmesser granuliert.

**Verfahrensbedingungen**

Temperatur des Planetwalzenextruders

| Zone | 1 | 2 | 3 | 4 | 5 | 6 | 7 |
|------|-----|-----|-----|-----|-----|-----|-----|
| Temp. | 165 | 160 | 160 | 110 | 110 | 110 | 135 |

| Durchsatz | 700 kg/h |
|-----------|----------|
| Drehzahl Planetwalze | 30 U/min |
| Austragsschnecke | 11 U/min |

Auf die vorgenannte Weise werden durch Einsatz verschiedener Pigmente vier unterschiedlich gefärbte Granulate erhalten, die in einem Pflugscharmischer der Fa. Lödige homogen gemischt und in einem Umluftofen UL 30 der Fa. Memmert auf 140 °C erwärmt wurden. Das temperierte Material wurde im Spalt

7

eines S-Form-Kalanders der Fa. Berstorff zu einem jaspierten Fell, d.h. einem längsgerichteten "verschmierten" Fell, ausgezogen. Nachfolgend wurde das jaspierte Fell sofort in einer Schlagkreuzmühle der Fa. Alpine mit einem Sieb (8 mm) zerkleinert. Das so erhaltene Granulat wurde wie in Beispiel 2 auf einer Zweitrommelauma verpreßt. Auf diese Art wurde eine Kunststoffbahn oder -platte mit einer Dicke von 2,1 mm und einer Dichte von 1,67 g/cm$^3$ erhalten.

Beispiel 4

Bindemittelgemisch 1 und Füllstoffgemisch 2 wie in Beispiel 2 wurden separat in einem Wirbelmischer der Fa. Henschel gemischt. Anschließend wurden die Gemische einem Zweiwellenextruder ZSK-70 der Fa. Werner & Pfleiderer zugeführt und plastifiziert. Dem Plastifikat wurde durch eine Öffnung im letzten Gehäuse dreifarbiges Schmuckgranulat, d.h. ein Granulat gleicher Rezeptur, aber mit anderer Farbe und in geringerer Menge (10 bis 20 Gew.-%), dann zugeführt, ohne daß eine Verteilung der Schmuckfarbe im Plastifikat stattfand. Die Granulatbildung erfolgte an einer Lochplatte mit 3,6 mm Durchmesser.

**Verfahrensbedingungen**

Temperaturen des Zweiwellenextruders

| Zone | 1 | 2 | 3 | 4 | 5 | 6 | 7 | 8 |
|------|-----|-----|-----|-----|-----|-----|-----|-----|
| Temp. | 230 | 230 | 230 | 230 | 180 | 180 | 180 | 180 |

| Drehzahl | 330 U/min |
|----------|-----------|
| Durchsatz | 440 kg/h |
| Schmuckgranulatanteil | 12 Gew.-% |

Das so erhaltene Granulat wurde auf einer Doppelbandpresse Contilam der Fa. Held zu einem 2,0 mm dicken Belag verpreßt (Einlauftrommel: 185 °C; Reaktionszone: 185 °C; Kühlzone: 40 °C; Druck: 6 bar).

Beispiel 5

22,2 Ethylen-Methylacrylat-Copolymer (Lotryl® 15 MA 03 von ELF ATO-Chemie)
2,5 EPDM (Buna® AP 437 von Hüls AG)
8,0 PE (Lupolen® 1800 S von BASF)
32,0 Talkum/Dolomit (Naintsch® SE Super von Naintsch)
30,0 Kreide (Omyacarb® 6 von Omya)
5,0 Pigment (Titandioxid)
0,1 Antioxidans (Irganox® 1076 von Ciba-Geigy)
0,2 Gleitmittel (Bärolub® FTA von Bärlocher)
100,0

Alle vorstehend genannten Komponenten wurden in einem Wirbelmischer der Fa. Henschel gemischt. Das erhaltene Gemisch wurde mittels eines Zweiwellenextruders ZE 40 A der Fa. Berstorff plastifiziert.

**Verfahrensbedingungen**

Temperaturen des Zweiwellenextruders

| Zone | 1 | 2 | 3 | 4 | 5 | 6 | 7 | 8 | 9 |
|------|-----|-----|-----|-----|-----|-----|-----|-----|-----|
| Temp. | 100 | 160 | 160 | 160 | 160 | 160 | 160 | 160 | 160 |

EP 0 617 083 A1

| Schneckendrehzahl | 220 U/min |
| Durchsatz | 60 kg/h |
| Massetemperatur | 195 °C |

Das erhaltene Plastifikat wurde direkt auf einen Scherwalzenkompaktor der Fa. Condux dosiert. Zur Erzielung einer Musterung wurde verschiedenfarbiges Granulat an verschiedenen Stellen des Materialstroms zugegeben, so daß eine differenzierte Vermischung mit dem Hauptmassestrom erfolgte. Das Plastifikat wurde am Granulatorteil des Scherwalzenkompaktors zu Granulat von 5 mm Durchmesser geformt. Die Walzentemperatur betrug an der Einlaufseite 160°C und an der Auslaufseite 120°C. Die Weiterverarbeitung zu Kunststoffbahnen oder -platten erfolgt wie in Beispiel 4.

Beispiel 6

Drei verschiedenfarbige Ansätze nach Beispiel 5 wurden auf jeweils einem Zweiwellenextruder ZE 40 der Fa. Berstorff plastifiziert.

**Verfahrensbedingungen**

Temperaturen des Zweiwellenextruders

| Zone | 1 | 2 | 3 | 4 | 5 | 6 | 7 | 8 | 9 |
| Temp. | 100 | 160 | 160 | 160 | 160 | 160 | 160 | 160 | 160 |

| Schneckendrehzahl | 150 U/min |
| Durchsatz | 50 kg/h |
| Massetemperatur | 180 °C |

Die Plastifikatmengen wurden gemeinsam auf eine Seite eines Walzwerks der Fa. Schwabenthan dosiert. Das Walzwerk wies einen keilförmigen Walzenspalt auf, d.h. der Spalt ist auf der Abzugsseite breiter als auf der Einlaufseite (Einlaufseite 0,5 bis 1,0 mm; Abzugsseite 2,0 bis 3,0 mm). Durch den keilförmigen Walzenspalt konnte an der Abnahmeseite kontinuierlich ein Fellstreifen abgezogen werden, wobei die drei Einzelfarben zu einem gemusterten Fell vermischt wurden, das nachfolgend einem Heißgranulator zugeführt wird. Das erhaltene Granulat wurde zu einer 2,0 mm dicken Platte mittels einer statischen Presse PWV 20 EH (Fa. Paul Weber) bei einer Temperatur von 160°C, einem Druck von 20 bar und einer Preßzeit von 10 Minuten verpreßt und unter Druck abgekühlt.

Beispiel 7

Die Kunststoffbahnen oder -platten der Beispiele 1 bis 6 wurden den vorstehend beschriebenen Tests unterworfen. Die Ergebnisse sind in der nachfolgenden Tabelle 1 aufgeführt.

9

Tabelle 1

| Versuchsergebnisse der aus Beispielen 1 bis 6 erhaltenen Kunststoffbahnen oder -platten | | | | |
|---|---|---|---|---|
| Beispiel | Verschleißfestigkeit (DIN 51963), Dickenverlust in [mm] | Schmelzfluß | Index (DIN 51955) | Elastizität (DIN 51955) |
| 1 | 0,25 | 0,5 | 4,8 | 87 |
| 2 | 0,13 | 0,6 | 3,8 | 89 |
| 3 | 0,15 | 0,6 | 3,7 | 90 |
| 4 | 0,15 | 0,6 | 3,9 | 87 |
| 5 | 0,12 | 0,4 | 3,2 | 90 |
| 6 | 0,12 | 0,4 | 3,3 | 90 |
| Mipolam®*) 900 | 0,15 | 0,2 | 5,5 | 91 |

*) Zum Vergleich wurde ein Bodenbelag Mipolam® 900 herangezogen. Dies ist ein Bodenbelag auf der Basis eines Ethylen-Vinylacetat-Copolymerisats der Fa. Hüls Troisdorf AG. Die Tabelle zeigt, daß die erfindungsgemäßen Kunststoffbahnen oder -platten zumindest vergleichbar gute Ergebnisse liefern wie Mipolam® 900.

**Patentansprüche**

1. Homogene Kunststoffbahnen oder -platten mit einem Gehalt an einem polymeren Bindemittel, üblichen Füllstoffen und gegebenenfalls Hilfsstoffen, dadurch gekennzeichnet, daß das polymere Bindemittel wenigstens ein Ethylen-Alkylacrylat-Copolymer enthält.

2. Kunststoffbahnen oder -platten nach Anspruch 1, dadurch gekennzeichnet, daß das Ethylen-Alkylacrylat-Copolymer 4 bis 30 Gew.-% Alkylacrylat enthält.

3. Kunststoffbahnen oder -platten nach Anspruch 1 oder 2, dadurch gekennzeichnet, daß das polymere Bindemittel 20-80 Gew.-% mindestens eines Ethylen-Alkylacrylat-Copolymers enthält.

4. Kunststoffbahnen oder -platten nach einem der vorhergehenden Ansprüche, dadurch gekennzeichnet, daß die Kunststoffbahnen oder -platten 20 bis 60 Gew.-% polymeres Bindemittel enthalten.

5. Kunststoffbahnen oder -platten nach einem der vorhergehenden Ansprüche, dadurch gekennzeichnet, daß das Alkylacrylat im Copolymer ein Methylacrylat, Ethylacrylat, Butylacrylat oder ein beliebiges Gemisch davon ist.

6. Kunststoffbahnen oder -platten nach einem der vorhergehenden Ansprüche, dadurch gekennzeichnet, daß das polymere Bindemittel zusätzlich wenigstens ein weiteres Polymer enthält.

7. Kunststoffbahnen oder -platten nach einem der vorhergehenden Ansprüche, dadurch gekennzeichnet, daß das polymere Bindemittel folgende Bestandteile umfaßt:
   (a) 40-80 Gew.-%    wenigstens eines Ethylen-Alkylacrylat-Copolymers,
   (b) 5-40 Gew.-%    wenigstens eines Homo- und/oder Copolymers von Ethylen und/oder Propylen, und
   (c) 2-20 Gew.-%    wenigstens eines Polymers, ausgewählt aus EPDM, SIS- und SBS-Blockcopolymer.

8. Kunststoffbahnen oder -platten nach einem der vorhergehenden Ansprüche, dadurch gekennzeichnet, daß die Kunststoffbahnen oder -platten folgende Bestandteile umfaßen:
   (aa) 20-60 Gew.-%      polymeres Bindemittel, das ein Bindemittel der vorstehenden Zusammensetzung (a), (b) und (c) sein kann,

(bb) 40-80 Gew.-% Füllstoff(e)

(cc) 2-8 Gew.-% Pigment(e)

(dd) 0,1-1 Gew.-% Antioxidantien und gegebenenfalls

(ee) bis zu 5 Gew.-% übliche Hilfsstoffe.

9. Kunststoffbahnen oder -platten nach einem der vorhergehenden Ansprüche, dadurch gekennzeichnet, daß die Kunststoffbahnen oder -platten mehrfarbig strukturiert sind.

10. Verwendung von Kunststoffbahnen oder -platten nach einem der Ansprüche 1 bis 9 als Wand-, Decken-, Bodenbelag, Dekorfolie oder künstliches Furnier.

11. Verfahren zur Herstellung von Kunststoffbahnen oder -platten nach einem der Ansprüche 1 bis 9 , wobei die Komponenten für die Kunststoffbahnen oder -platten, umfassend die Bestandteile des polymeren Bindemittels, wenigstens einen Füllstoff, die Hilfsstoffe und gegebenenfalls wenigstens ein Pigment vorgemischt, plastifiziert und granuliert werden und das Granulat nachfolgend in einem Verdichtungsaggregat zu einer Bahn oder Platte verpreßt wird.

12. Verfahren nach Anspruch 11, wobei mindestens zwei unterschiedlich gefärbte Granulate in dem Verdichtungsaggregat zu einer Bahn oder Platte verpreßt werden.

13. Verfahren nach Anspruch 11, wobei die Komponenten in Gegenwart oder Abwesenheit eines Pigments vorgemischt werden und mittels eines Zweiwellenextruders plastifiziert werden, das Plastifikat direkt einem Scherwalzenkompaktor zugeführt wird und dem Plastifikat an beliebig bestimmbaren Stellen des Scherwalzenkompaktors vorbestimmte Mengen mindestens eines von der Grundfarbe des Plastifikats verschiedenen Pigments oder gefärbten vorgefertigten Granulats zudosiert, das Platifikat am Granulatorteil am Ende des Scherwalzenkompaktors granuliert und das in sich gemusterte Granulat in dem Verdichtungsaggregat zu einer Bahn oder Platte verpreßt wird.

Europäisches
Patentamt

**EUROPÄISCHER RECHERCHENBERICHT**

Nummer der Anmeldung

EP 94 10 4718

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | DE-A-15 20 734 (GULF OIL) <br> * Seite 2, Absatz 2 -Absatz 4 * <br> * Seite 4, Absatz 5 - Seite 5, Absatz 1 * <br> * Seite 5, letzter Absatz - Seite 6, Absatz 2 * <br> --- | 1-13 | C08L23/08 |
| D,Y | EP-A-0 321 760 (HÜLS-TROISDORF) <br> * Seite 3, Zeile 19 - Zeile 45 * <br> * Seite 4, Zeile 20 - Zeile 54 * <br> * Seite 15, Zeile 35 - Zeile 50 * <br> ----- | 1-13 | |

**RECHERCHIERTE SACHGEBIETE (Int.Cl.5)**

C08L

Der vorliegende Recherchenbericht wurde für alle Patentansprüche erstellt

| Recherchenort | Abschlußdatum der Recherche | Prüfer |
|---|---|---|
| DEN HAAG | 20. Juni 1994 | Schmidt, H |